# FASCICULE DE BREVET EUROPEEN

(11) **EP 1 292 527 B1**
(45) Date de publication et mention de la délivrance du brevet: **07.01.2004**
(21) Numéro de dépôt: 01943598.1
(22) Date de dépôt: 12.06.2001
(51) Int. Cl.: B67B 3/20

(54) **BROCHE DE VISSAGE**
SCHRAUBSPINDEL
SCREWING SPINDLE

(30) Priorité: 21.06.2000 FR 0007915
(43) Date de publication de la demande: 19.03.2003
(73) Titulaire: S.E.R.A.C. GROUP, 72400 La Ferte-Bernard (FR)
(72) Inventeur: GRUSON, Bertrand, F-50290 BREVILLE SUR MER (FR)
(74) Mandataire: Lavialle, Bruno
(86) Numéro de dépôt international: PCT/FR2001/001807
(87) Numéro de publication internationale: WO 2001/098196

(56) Documents cités:
- FR-A- 2 739 048
- US-A- 2 449 161
- US-A- 5 417 031

## Description

La présente invention concerne une broche de vissage utilisable notamment dans une chaîne d'embouteillage pour le vissage de bouchons sur le col de récipients.

On connaît des broches de vissage qui comprennent une douille d'entraînement ayant une extrémité pourvue d'une collerette filetée sur laquelle est vissé un écrou solidaire d'une pince de préhension de bouchon qui comprend un organe support cylindrique équipé de mâchoires mobiles. L'association de la collerette filetée et de l'écrou réalise un accouplement démontable, ce qui permet de remplacer la pince de préhension pour des raisons de maintenance et plus généralement d'avoir des jeux de pinces interchangeables adaptées à différents types de bouchons. Afin d'éviter un démontage accidentel de l'organe support des mâchoires le pas de vis de l'écrou doit être irréversible, c'est-à-dire avec un pas court nécessitant d'effectuer plusieurs tours de vissage ou de dévissage de l'écrou lors du montage ou du démontage de la pince de préhension. En outre, plusieurs broches de vissage sont généralement regroupées sur un même carrousel de bouchage de sorte que lors d'un changement du type de bouchon utilisé le remplacement des pinces nécessite un arrêt de la chaîne d'embouteillage dont la durée est proportionnelle au nombre de broches de vissage montées sur le carrousel. Un tel arrêt provoque une chute de la productivité.

Le document US-A-2 449 161 décrit une broche de vissage conforme au préambule de la revendication 1.

Selon l'invention, on prévoit une broche de vissage comprenant une douille d'entraînement à laquelle est associée une pièce de préhension comportant un organe support cylindrique équipé de mâchoires mobiles et pourvu extérieurement d'au moins un ergot s'étendant radialement en saillie, la douille comportant au moins une fente ayant un premier tronçon débouchant sur un bord libre de la douille et un deuxième tronçon ayant une partie terminale formant avec la douille un angle adapté à retenir l'ergot dans la partie terminale de la fente lorsqu'il est engagé dans celle-ci et la douille étant équipée d'une bague comportant au moins un taquet qui s'étend radialement en saillie vers l'intérieur de la bague et est reçu dans la fente, la bague étant montée sur la douille pour coulisser entre une position de verrouillage dans laquelle le taquet s'étend dans le premier tronçon de la fente en regard du deuxième tronçon, et une position de déverrouillage dans laquelle le taquet est escamoté dans un troisième tronçon de la fente.

Ainsi, l'accouplement est réalisé par un simple déplacement axial de l'organe support cylindrique par rapport à la douille, suivi d'une rotation pour amener l'ergot dans la partie terminale de la fente. Ces deux déplacements peuvent être effectués en un seul mouvement de sorte que le montage de l'organe support cylindrique sur la douille et le démontage de celui-ci sont beaucoup plus rapides qu'avec un écrou tout en assurant un verrouillage positif de l'organe support des mâchoires par rapport à la douille.

Avantageusement, le deuxième tronçon de fente s'étend d'un côté du premier tronçon de fente tel que lors d'un entraînement en rotation de la douille, l'ergot de l'organe support cylindrique tend à être amené vers la partie terminale du deuxième tronçon de la fente. Ainsi, le risque d'un désaccouplement accidentel de la douille et de l'organe support cylindrique est encore minimisé.

Selon un mode de réalisation particulier, le premier tronçon de fente s'étend sensiblement selon une direction axiale de la douille et le deuxième tronçon de fente s'étend selon une direction sensiblement circonférentielle de la douille et, de préférence, le troisième tronçon s'étend dans le prolongement du premier tronçon. La réalisation de la fente est alors particulièrement simple.

Avantageusement encore, la broche comprend un moyen de rappel élastique de la bague dans la position de verrouillage. L'accouplement est ainsi automatiquement verrouillé sans intervention manuelle directe sur la bague.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue partielle en coupe longitudinale d'une broche de vissage conforme à l'invention,
- la figure 2 est une vue en coupe selon la ligne II-II de la figure 1,
- les figures 3 et 4 sont des vues analogues à la figure 1 dans différentes phases de l'accouplement de la pince de préhension à la douille d'entraînement de la broche de vissage,
- la figure 5 est une vue analogue à la figure 1 de la broche de vissage conforme à l'invention après accouplement de la pince de préhension.

La broche de vissage conforme à l'invention est destinée de manière connue à être attelée à un arbre d'entraînement en rotation et implantée par exemple dans un carrousel de fermeture de récipients au moyen de bouchons.

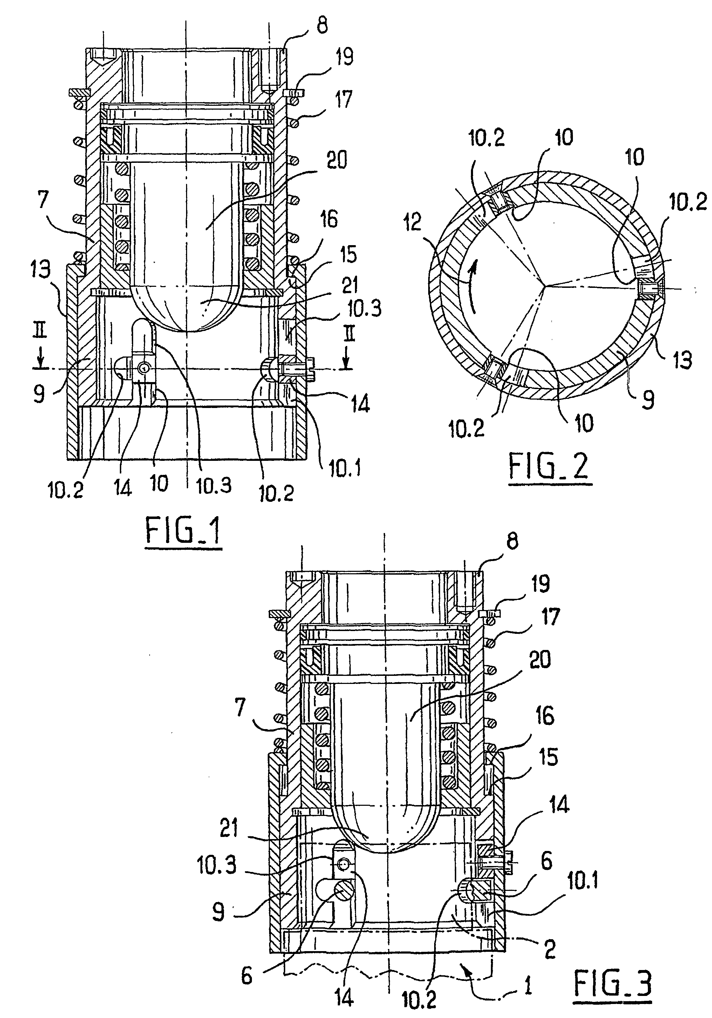

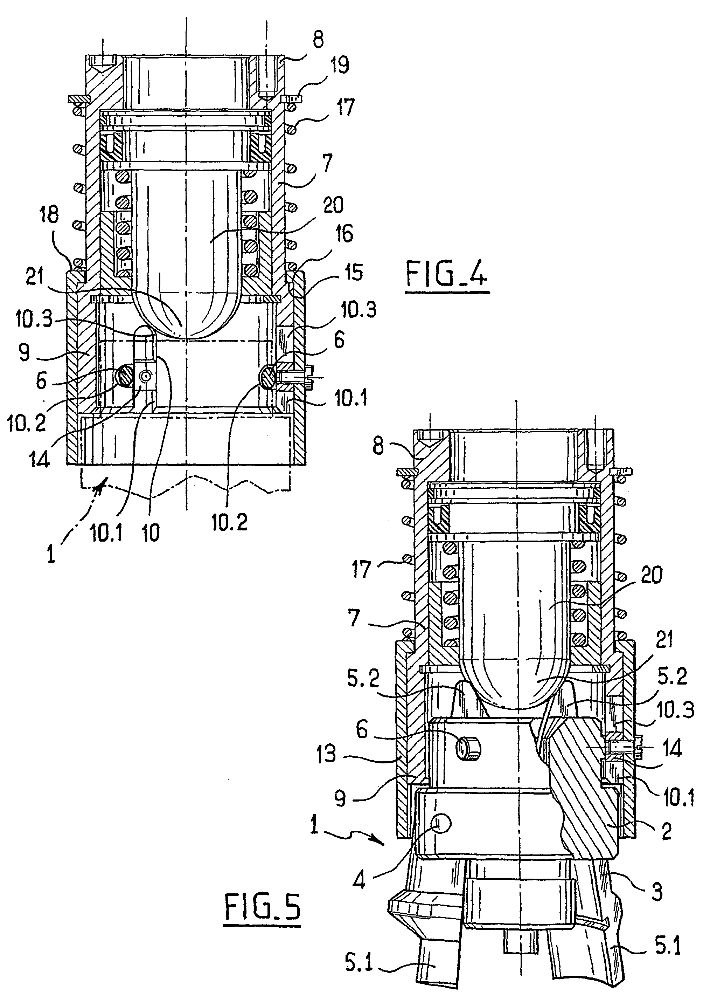

En référence aux figures 3 à 5, la broche de vissage comprend une pince 1 de préhension de bouchons qui comprend un organe support cylindrique 2 sur lequel sont montées pour pivoter des mâchoires 3 au moyen d'axes 4. Chaque mâchoire 3 possède une extrémité formant un mors 5.1 et une extrémité opposée formant un levier 5.2 d'actionnement de la mâchoire 3. Des ergots 6 s'étendent radialement en saillie de la surface externe de l'organe support cylindrique 2. Ces ergots 6 sont ici au nombre de trois disposés à 120° les uns des autres. Afin d'assurer une bonne lisibilité des figures 3 et 4, seuls les ergots 6 sont représentés en coupe sur ces figures et le reste de la pince de préhension 1 est représentée en traits mixtes.

En référence également aux figures 1 et 2, la broche de vissage comprend également une douille 7 comprenant une portion d'extrémité 8 destinée à être fixée à l'arbre d'entraînement en rotation et une portion d'extrémité 9 opposée délimitant un logement cylindrique de section circulaire légèrement supérieure à la section transversale de l'organe support cylindrique.

La portion d'extrémité 9 de la douille 7 comprend des fentes 10 présentant une largeur légèrement supérieure à la section transversale des ergots 6. Ces fentes 10 sont ici au nombre de trois disposées à 120° les unes des autres.

Chaque fente 10 comprend un premier tronçon 10.1 s'étendant à partir d'un bord libre 11 de la portion d'extrémité 9 de la douille 7 selon une direction axiale de la douille 7 et un deuxième tronçon 10.2 raccordé au premier tronçon 10.1 d'un côté de celui-ci opposé au sens de rotation de la douille 7 indiqué en 12 à la figure 2 à savoir le sens de vissage. Le deuxième tronçon 10.2 s'étend selon une direction circonférentielle de la douille 7 sur une longueur légèrement supérieure au diamètre des ergots 6. La fente 10 comprend également un troisième tronçon 10.3 s'étendant dans le prolongement du premier tronçon 10.1 au-delà du deuxième tronçon 10.2.

La douille 7 est équipée d'une bague de verrouillage 13 comportant trois taquets 14 qui s'étendent radialement en saillie vers l'intérieur de la bague 13 et sont reçus dans les fentes 10. Ces taquets 14 sont ici au nombre de trois disposés à 120° les uns des autres.

La bague 13 est montée sur la douille 7 pour coulisser axialement entre une position de verrouillage dans laquelle la bague a un épaulement interne 16 en butée contre un épaulement externe 15 de la douille 7 et les taquets 14 s'étendent dans le premier tronçon 10.1 des fentes 10 en regard du deuxième tronçon 10.2 et une position de déverrouillage dans laquelle les taquets sont escamotés dans le troisième tronçon 10.3 des fentes 10. La bague 13 est rappelée dans sa position de verrouillage par un moyen élastique, ici un ressort hélicoïdal de compression 17 qui s'étend entre une face terminale 18 de la bague 13 adjacente à l'épaulement 15 et une butée externe 19 portée par la douille 7.

Lors du montage de la pince de préhension 1, la bague 13 étant dans sa position de verrouillage (figures 1 et 2), l'organe support cylindrique 2 est inséré dans le logement défini par la portion d'extrémité 9 de la douille 7 de manière que les ergots 6 s'engagent dans le premier tronçon 10.1 des fentes 10, par exemple en exerçant un léger appui vers le haut sur la pince de préhension 1 tout en faisant tourner celle-ci jusqu'à ce que les ergots 6 s'engagent dans le premier tronçon 10.1 des fentes 10.

Lorsque les ergots 6 arrivent en butée contre les taquets 14 ils entraînent la bague 13 dans sa position de déverrouillage à l'encontre de l'effort exercé par le ressort 17 sur la bague 13 (figure 3).

L'opérateur fait alors pivoter la bague 13 dans le sens opposé au sens de vissage 12 de sorte que les ergots 6 s'engagent dans le deuxième tronçon 10.2 des fentes 10 dès que les ergots 6 se trouvent en regard des deuxièmes tronçons 10.2. Les ergots 6 ne s'opposent alors plus à l'effort du ressort 17 qui repousse la bague 13 dans sa position de verrouillage. Les taquets 14 sont à nouveau positionnés en regard du deuxième tronçon 10.2 des fentes 10 et empêchent que les ergots 6 ne s'échappent des deuxièmes tronçons 10.2 (figures 4 et 5).

La broche de vissage est alors prête à l'utilisation.

La commande des mâchoires 3 est réalisée de manière connue par l'intermédiaire d'un piston 20 qui est monté dans la douille 7 pour coulisser entre une position sortie dans laquelle le piston 20 a une extrémité active 21 qui vient s'insérer entre les extrémités formant levier 5.2 des mâchoires 3 pour écarter ces extrémités les unes des autres et donc rapprocher les extrémités opposées 5.1 amenant ainsi les mâchoires dans une position fermée, et une position en retrait dans laquelle l'extrémité active 21 du piston n'est plus en contact avec les extrémités 5.2 des mâchoires 3 de sorte que les mâchoires 3 sont ramenées en position ouverte par des moyens élastiques non représentés.

Le démontage de la pince 1 est réalisé en amenant la bague 13 dans sa position de déverrouillage, puis en faisant pivoter l'organe support cylindrique 2 par rapport à la douille 7 dans le sens de vissage 12 pour amener les ergots 6 dans les premiers tronçons 10.1 des fentes 10 et enfin en tirant sur l'organe support cylindrique 2 pour le dégager de la douille 7.

Bien entendu, l'invention n'est pas limitée au mode de réalisation décrit et on peut y apporter des variantes de réalisation sans sortir du cadre de l'invention tel que défini par les revendications.

En particulier, le nombre d'ergots et de fentes peut être modifié notamment en fonction du couple de vissage à transmettre à la pince.

En outre, les fentes peuvent revêtir d'autres formes. Ainsi, le troisième tronçon peut faire un angle avec le premier tronçon, le premier tronçon peut être incliné par rapport à l'axe longitudinal de la douille et le deuxième tronçon peut faire un angle avec la direction circonférentielle de la douille. Il peut alors être nécessaire de monter la bague de telle manière qu'elle puisse tourner par rapport à la douille.

On peut également prévoir un quatrième tronçon de fente s'étendant à partir de l'extrémité du deuxième tronçon opposée au raccordement avec le premier tronçon, et formant un angle avec le deuxième tronçon pour assurer un verrouillage des ergots 6. Les taquets 14 ayant alors une fonction simplement sécuritaire.

## Revendications

1. Broche de vissage comprenant une douille d'entraînement (7) à laquelle est associée une pince de préhension (1) comportant un organe support cylindrique (2) équipé de mâchoires mobiles (3), l'organe support cylindrique est pourvu extérieurement d'au moins un ergot (6) s'étendant radialement en saillie, en ce que la douille comporte au moins une fente (10) ayant un premier tronçon (10.1) débouchant sur un bord libre (11) de la douille et un deuxième tronçon (10.2) ayant une partie terminale formant avec la douille (7) un angle adapté à retenir l'ergot (6) dans la partie terminale de la fente lorsqu'il est engagé dans celle-ci, et **caractérisée en ce que** la douille (7) est équipée d'une bague (13) comportant au moins un taquet (14) qui s'étend radialement en saillie vers l'intérieur de la bague et est reçu dans la fente, la bague étant montée sur la douille pour coulisser entre une position de verrouillage dans laquelle le taquet s'étend dans le premier tronçon de la fente en regard du deuxième tronçon, et une position de déverrouillage dans laquelle le taquet est escamoté dans un troisième tronçon (10.3) de la fente (10).

2. Broche de vissage selon la revendication 1, **caractérisée en ce que** le deuxième tronçon de fente (10.2) s'étend d'un côté du premier tronçon de fente (10.1) tel que lors d'un entraînement en rotation de la douille (7), l'ergot (6) de l'organe support cylindrique (2) tend à être amené vers la partie terminale du deuxième tronçon (10.2) de la fente.

3. Broche de vissage selon la revendication 1 ou la revendication 2, **caractérisée en ce que** le premier tronçon de fente (10.1) s'étend sensiblement selon une direction axiale de la douille (7) et **en ce que** le deuxième tronçon de fente (10.2) s'étend selon une direction sensiblement circonférentielle de la douille (7).

4. Broche de vissage selon la revendication 3, **caractérisée en ce que** le troisième tronçon (10.3) s'étend dans le prolongement du premier tronçon (10.1).

5. Broche de vissage selon l'une quelconque des revendications 1 à 4, **caractérisée en ce qu'**elle comprend un moyen (17) de rappel élastique de la bague (13) dans la position de verrouillage.

## Patentansprüche

1. Schraubspindel, umfassend eine Antriebshülse (7), mit der eine Greifzange (1) verbunden ist, die ein zylindrisches Halteelement (2) enthält, das mit beweglichen Klemmbacken (3) versehen ist, wobei das zylindrische Halteelement außen mit mindestens einer radial abstehenden Nase (6) versehen ist, wobei die Hülse mindestens einen Schlitz (10) aufweist, der einen ersten Abschnitt (10.1) hat, der an einem freien Rand (11) der Hülse mündet, sowie einen zweiten Abschnitt (10.2) mit einem Endstück, das mit der Hülse (7) einen Winkel bildet, der dazu geeignet ist, die Nase (6) in dem Endstück des Schlitzes zu halten, wenn er mit diesem in Eingriff steht, **dadurch gekennzeichnet, daß** die Hülse (7) mit einem Ring (13) versehen ist, der mindestens einen Mitnehmer (14) enthält, der radial ins Innere des Ringes vorsteht und in dem Schlitz aufgenommen ist, wobei der Ring derart an der Hülse montiert ist, daß er zwischen einer Verriegelungsstellung, in der sich der Mitnehmer in dem ersten Abschnitt des Schlitzes gegenüber dem zweiten Abschnitt erstreckt, und einer Entriegelungsstellung verschiebbar ist, in der der Mitnehmer in einen dritten Abschnitt (10.3) des Schlitzes (10) eingefahren ist.

2. Schraubspindel nach Anspruch 1, **dadurch gekennzeichnet, daß** sich der zweite Schlitzabschnitt (10.2) von einer Seite des ersten Schlitzabschnittes (10.1) erstreckt, derart, daß bei einem Drehantrieb der Hülse (7) die Nase (6) des zylindrischen Halteelements (2) dazu neigt, zum Endstück des zweiten Schlitzabschnittes (10.2) mitgenommen zu werden.

3. Schraubspindel nach Anspruch 1 oder 2, **dadurch gekennzeichnet, daß** sich der erste Schlitzabschnitt (10.1) im wesentlichen in Axialrichtung der Hülse (7) erstreckt und daß sich der zweite Schlitzabschnitt (10.2) im wesentlichen in Umfangsrichtung der Hülse (7) erstreckt.

4. Schraubspindel nach Anspruch 3, **dadurch gekennzeichnet, daß** sich der dritte Abschnitt (10.3) in der Verlängerung des ersten Abschnittes (10.1) erstreckt.

5. Schraubspindel nach einem der Ansprüche 1 bis 4, **dadurch gekennzeichnet, daß** sie elastische Rückstellmittel (17) umfaßt, um den Ring (13) in die Verriegelungsstellung rückzustellen.

## Claims

1. A screw-tightening spindle comprising a drive sleeve (7) associated with a chuck (1) comprising a cylindrical support member (2) fitted with moving jaws (3), in which the cylindrical support member is provided on the outside with at least one stud (6) extending radially outwards, the sleeve includes at least one slot (10) having a first segment (10.1) opening out in a free edge (11) of the sleeve and a second segment (10.2) having an end portion forming an angle relative to the sleeve (7) suitable for retaining the stud (7) in the end portion of the slot when the stud is engaged therein, **characterized in that** the sleeve (7) is fitted with a ring (13) having at least one stop (14) which extends radially inwards from the ring and is received in the slot, the ring being mounted on the sleeve to slide between a locking position in which the stop extends in the first segment of the slot in register with the second segment, and an unlocking position in which the stop is retracted into a third segment (10.3) of the slot (10).

2. A screw-tightening spindle according to claim 1, **characterized in that** the second segment of the slot (10.2) extends from one side of the first segment of the slot (10.1) such that when the sleeve (7) is rotated, the stud (6) of the cylindrical support member (2) tends to be urged towards the end portion of the second segment (10.2) of the slot.

3. A screw-tightening spindle according to claim 1 or claim 2, **characterized in that** the first slot segment (10.1) extends substantially along an axial direction of the sleeve (7), and **in that** the second slot segment (10.2) extends along a substantially circumferential direction of the sleeve (7).

4. A screw-tightening spindle according to claim 3, **characterized in that** the third segment (10.3) extends in line with the first segment (10.1).

5. A screw-tightening spindle according to any one of claims 1 to 4, **characterized in that** it includes means (17) for resiliently urging the ring (13) into the locking position.
